# EUROPÄISCHE PATENTSCHRIFT

(11) **EP 0 887 319 B1**
(45) Veröffentlichungstag und Bekanntmachung des Hinweises auf die Patenterteilung: **13.09.2006**
(21) Anmeldenummer: 98401019.9
(22) Anmeldetag: 24.04.1998
(51) Int. Cl.: C03B 37/027, C03C 25/10

(54) **Vorrichtung und Verfahren zur Regelung der Beschichtungsdicke einer optischen Faser**
Method and apparatus for regulating the thickness of a coating of an optical fibre
Procédé et dispositif de pour régler l'épaisseur d'un revêtement d'une fibre optique

(30) Priorität: 28.06.1997 DE 19727574
(43) Veröffentlichungstag der Anmeldung: 30.12.1998
(73) Patentinhaber: Draka Comteq B.V., 1018 TX Amsterdam (NL)
(72) Erfinder: Rosenkranz, Jürgen, Dr., 41048 Mönchengladbach (DE); Lysson, Hans-Jürgen, 41352 Korschenbroich (DE); Reiners, Wilhelm, Dr., 41844 Wegberg (DE); Bartling, Franz-Peter, 40221 Düsseldorf (DE)
(74) Vertreter: Dohmen, Johannes Maria Gerardus

(56) Entgegenhaltungen:
- EP-A- 0 320 384
- WO-A-97/20237
- DE-A- 4 412 563
- GB-A- 2 287 244
- PATENT ABSTRACTS OF JAPAN vol. 012, no. 365 (C-532), 29. September 1988 & JP 63 117934 A (SHOWA ELECTRIC WIRE & CABLE CO LTD), 21. Mai 1988
- PATENT ABSTRACTS OF JAPAN vol. 018, no. 140 (C-1177), 8. März 1994 & JP 05 319852 A (FUJIKURA LTD), 3. Dezember 1993
- PATENT ABSTRACTS OF JAPAN vol. 004, no. 038 (C-004), 27. März 1980 & JP 55 010470 A (NT&T CORP ET AL), 24. Januar 1980
- PATENT ABSTRACTS OF JAPAN vol. 015, no. 377 (C-0870), 24. September 1991 & JP 03 153541 A (SUMITOMO ELEC IND LTD), 1. Juli 1991
- PATENT ABSTRACTS OF JAPAN vol. 009, no. 175 (C-292), 19. Juli 1985 & JP 60 046954 A (NIPPON DENSHIN DENWA KOSHA), 14. März 1985
- PATENT ABSTRACTS OF JAPAN vol. 010, no. 383 (C-393), 23. Dezember 1986 & JP 61 174133 A (HITACHI CABLE LTD), 5. August 1986
- PATENT ABSTRACTS OF JAPAN vol. 096, no. 011, 29. November 1996 & JP 08 169732 A (YAZAKI CORP), 2. Juli 1996
- PATENT ABSTRACTS OF JAPAN vol. 011, no. 273 (C-445), 4. September 1987 & JP 62 078126 A (SUMITOMO ELECTRIC IND LTD), 10. April 1987
- PATENT ABSTRACTS OF JAPAN vol. 010, no. 090 (C-337), 8. April 1986 & JP 60 221337 A (FUJIKURA DENSEN KK ET AL), 6. November 1985

## Beschreibung

Die Erfindung bezieht sich auf eine Vorrichtung gemäß dem Oberbegriff des Anspruches 1 sowie ein Verfahren zur Regelung der Beschichtungsdicke einer optischen Faser.

Optische Fasern, die beispielsweise für Lichtwellenleiterkabel Verwendung finden, werden in aller Regel unmittelbar nach ihrer Herstellung in einem kontinuierlichen Prozeß mit einer Beschichtung zum Oberflächenschutz versehen. Die Herstellung der Faser erfolgt im Stande der Technik üblicherweise durch Ziehen in einem Ziehofen aus einer angeschmolzenen Vorform. Da der Ziehvorgang bei hoher Temperatur erfolgt (bei Glasfasern etwa 2000° C), während die Beschichtung typischerweise bei Temperaturen unterhalb von etwa 100° C vorgenommen wird, wird die Faser zwischen Herstellungs- und Beschichtungseinheit durch eine Kühleinheit geführt. Meist verläuft die Faser innerhalb der Kühleinheit in einem Schutzgasstrom, der ihre Oberfläche vor dem Zutritt aggressiver Luftbestandteile und Staubpartikel schützt.

In der Beschichtungseinheit durchläuft die Faser ein Bad mit dem flüssigen, häufig unter Druck stehenden Beschichtungsmittel, aus dem sie durch eine Beschichtungsdüse austritt. Dabei hängt die Dicke der Oberflächenbeschichtung neben der Ziehgeschwindigkeit der Faser von der Viskosität des Beschichtungsmittels ab. Weiterhin umfaßt die Beschichtungseinheit in der Regel ein UV-Lampensystem, da vorzugsweise UV-härtende Beschichtungsmittel Verwendung finden.

Eine möglichst konstante Schichtdicke ist für die Qualität der Faser von entscheidender Bedeutung und innerhalb enger Grenzen spezifiziert. Daher verläuft die Faser abschließend durch ein Meßgerät zur Bestimmung ihres Durchmessers einschließlich der Beschichtung. Dieser Meßwert wird einem Steuerelement zugeführt, welches ein Regelglied in Abhängigkeit vom gemessenen Durchmesser derart steuert, daß der Beschichtungsdurchmesser konstant ist.

Die Druckschrift EP 619 275 A2 zeigt eine Vorrichtung der vorbeschriebenen Art. Dabei ist das Regelglied eine Temperaturregelung in der Beschichtungseinheit, welche die Temperatur des flüssigen Beschichtungsmittels einstellt. In der Folge verändert sich seine Viskosität und entsprechend die Menge des aus der Beschichtungsdüse austretenden Materials. Die Beschichtungsdicke läßt sich somit auf einen Sollwert einregeln.

Als nachteilig erweist sich jedoch, daß die Viskositätsänderungen des Beschichtungsmaterials seine Strömungsverhältnisse beeinflussen, was wiederum unerwünschte Variationen in den Eigenschaften der erzeugten Beschichtung bewirkt. Dazu trägt im besonderen Maße bei, daß die Materialeigenschaften der Beschichtung durch Schervorgänge zwischen Flüssigkeitsschicht im Bereich der Beschichtungsdüse beeinflußt werden, in der sich das Beschichtungsmittel bei gebräuchlichen Prozeßparametern als Nicht-Newton' sche Flüssigkeit verhält. Weiterhin sind Regelungsgeschwindigkeit, Regelungspräzision und die Variationsbreite des einstellbaren Dickenbereiches unzureichend, insbesondere wenn zu Beginn und Ende der Faserherstellung die Ziehgeschwindigkeit der Faser, mit der ihr Kerndurchmesser eingestellt wird, über einen weiten Bereich geändert wird. Dabei variiert die Fasertemperatur ebenso wie aufgrund von Umgebungseinflüssen, was die Kontrolle über den Beschichtungsprozeß reduziert.

Nun ist aus JP 05 319852 A bekannt, daß sich die Dicke der Beschichtung durch Variation der Fasertemperatur beeinflussen läßt. Zu diesem Zweck ist der Beschichtungseinheit ein Regelglied vorgeordnet, mit dem die Temperatur der Faser einstellbar ist. Im durch die thermische Stabilität des Beschichtungsmaterials vorgegebenen Bereich ist die Fasertemperatur dabei beliebig variierbar. Dagegen wird die Temperatur des zugeführten flüssigen Beschichtungsmaterials sowie der Bauteile der Beschichtungseinheit in der Regel konstant gehalten. Die Einstelltemperatur der Faser kann beim Eintritt in das Beschichtungsmaterial von der optimalen Beschichtungstemperatur abweichen, die sich durch Wärmeaustausch mit dem Beschichtungsmedium einstellt.

Vor diesem Hintergrund hat es sich die Erfindung zur Aufgabe gestellt, eine Vorrichtung sowie ein Verfahren zur Regelung der Beschichtungsdicke einer optischen Faser zu entwickeln, die eine verbesserte Kontrolle über den Beschichtungsprozeß gestattet und Beschichtungen verbesserter Homogenität erzeugt.

Diese Aufgabe wird durch eine Vorrichtung nach der Lehre des Anspruches 1 sowie das im Anspruch 5 beschriebene Verfahren gelöst.

Die Erfindung geht davon aus, dass sich die Dicke der Beschichtung durch Variation der Fasertemperatur beeinflussen läßt. Dabei wird davon ausgegangen, dass Änderungen der Fasertemperatur zur Regelung der Beschichtungsdicke im Vergleich zur gesamten Temperaturdifferenz entlang der Faser gering sind, weshalb eine Unterteilung der Temperaturregelung in zwei getrennte Stufen zweckmäßig ist. Die in Bewegungsrichtung der Faser erste Stufe erbringt die Hauptkühlleistung und wird unter konstanten Bedingungen betrieben. Die zweite Stufe besteht aus einen Regelvorrichtung, die eine demgegenüber wesentlich geringere Leistung hat und auf eine der vorbeschriebenen Arten geregelt wird. Damit wird die Trägheit des Regelkreises reduziert, so daß sich eine verzögerungsarme und leicht kontrollierbare Einstellung der Beschichtungsdicke erreichen läßt. Gegebenenfalls kann dabei eine Heizung in der zweiten Stufe vorgesehen werden, falls die Faser in der ersten Stufe unter die gewünschte Einstelltemperatur gekühlt wird.

Bei der vorgeschlagenen Vorrichtung erfolgt die Regelung der Beschichtungsdicke der Faser bei konstanter Temperatur der Beschichtungseinheit. Eine verbesserte Homogenität der Beschichtungseigenschaften ist die vorteilhafte Folge. Zudem ist die Kontrolle über die Parameter der Beschichtung wesentlich verbessert, speziell wenn die Temperatur des zugeführten Beschichtungsmaterials und der Beschichtungseinheit mit einer Regelvorrichtung konstant gehalten wird. Unbeabsichtigte Temperaturvariationen der Faser in der Beschichtungseinheit, etwa bei einer Änderung der Ziehgeschwindigkeit, sind durch die erfindung ausgeschlossen.

In vorteilhafter Weise ist die Regelvorrichtung ein Heiz- oder Kühlelement, durch das die Faser verläuft. Aufgrund der guten Regelbarkeit sind zu diesem Zweck elektrische Heiz- bzw. Kühlelemente bevorzugt. Ein einfaches und zweckmäßiges Ausführungsbeispiel ist ein spulenförmiger Heizdraht, der die Faser koaxial umgibt. Auf diese Weise entsteht eine Heizung geringer Wärmekapazität, die mit geringem Aufwand eine verzögerungsarme Regelung der Fasertemperatur gestattet.

Insbesondere bei der Ausbildung der Regelvorrichtung als Heiz- bzw. Kühlelement bietet sich ihre Anordnung zwischen Kühleinheit und Beschichtungseinheit an.

Durch ein Regelglied wird ein Betriebsparameter der Regelvorrichtung eingestellt. Auch auf diese Weise läßt sich die Temperatur der Faser variieren. Dabei kann das Regelglied beispielsweise die Temperatur einer Oberfläche des Kühlelementes einstellen, nahe der die Faser verläuft; insbesondere kann es zu diesem Zweck die Temperatur oder den Volumenstrom eines Kühlmediums ändern, das zur Wärmeabfuhr aus dem Mantel des Kühlelementes dient. Weiterhin lassen sich mit dem Regelglied Parameter desjenigen Mediums beeinflussen, in aller Regel ein Schutzgas, welches in den Regelvorrichtung die Wärme von der Faser ableitet. Beispielsweise kann die Eintrittstemperatur des Schutzgases in die Regelvorrichtung oder sein Volumenstrom geändert werden. Eine bevorzugte und besonders rasche Änderung der Fasertemperatur ist jedoch erreichbar, indem die Zusammensetzung des Schutzgases geändert wird. Beispielsweise läßt sich bei Verwendung von Helium als Schutzgas die Wärmeableitung durch Beimengung von Stickstoff reduzieren.

Meist wird im Stande der Technik nach dem Aushärten der Beschichtung auf der Faseroberfläche eine zweite Oberflächenbeschichtung aufgetragen. Vielfach kann dabei auf eine aktive Regelung der Beschichtungsdicke durch einen Regelkreis verzichtet werden, da die Fasertemperatur und der Durchmesser des Primärschutzes in der unmittelbar vorhergehenden ersten Beschichtungseinheit bereits präzise eingestellt wurde. Zudem steigt die längenspezifische Masse und Wärmekapazität der Faser durch die erste Beschichtung an, was Temperaturschwankungen verringert und die erforderliche Leistung zur Regelung erhöht. Um eine verbesserte Kontrolle der Beschichtungsdicke zu erreichen, besteht jedoch auch hier die Möglichkeit einer aktiven Regelung. Zu diesem Zweck verläuft die Faser durch ein weiteres der zweiten Beschichtungseinheit nachgeordnetes Meßgerät, das ihren Durchmesser bestimmt. In Abhängigkeit vom Faserdurchmesser wird ein weiteres Regelglied gesteuert, mit dessen Hilfe die Temperatur der Faser vor dem Eintritt in die zweite Beschichtungseinheit einstellt wird grundsätzlich ist denkbar, eine weitere Regelvorrichtung vorzusehen, bei der das Regelglied einen der oben beschriebenen Betriebsparameter einstellt. Vorzugsweise ist die weitere Regelvorrichtung ein zwischen beiden Beschichtungseinheiten angeordnetes Heiz und/oder Kühlelement. Zweckmäßig werden sämtliche Regelglieder von einer gemeinsamen Steuerung kontrolliert.

Ein vorteilhaftes Verfahren zur Regelung der Beschichtungsdicke einer optischen Faser besteht darin, die Faser zunächst bei erhöhter Temperatur herzustellen, insbesondere aus einer Glasschmelze, und sie näherungsweise auf eine geeignete Beschichtungstemperatur abzukühlen. Anschließend wird die Faser beschichtet, indem sie durch ein flüssiges, aushärtbares Beschichtungsmittel geführt wird. Der Faserdurchmesser einschließlich der Beschichtung wird gemessen. Mit einem Regelglied Regelvorrichtung wird die Kühlleistung oder ein zwischen Kühlung und Beschichtung angeordnetes Heizelement derart geregelt, daß die Dicke der Beschichtung konstant ist. Erfolgt die Beschichtung der Faser in einer Beschichtungsdüse, so hat eine Erhöhung der Fasertemperatur dabei eine Abnahme, die Erniedrigung eine Zunahme der Beschichtungsdicke zur Folge. Die Regelung erfolgt auf im Stande der Technik bekannte Weise mit einem Sollwertregler.

Um die Regelung der Beschichtungsdicke ausschließlich mit einem einfachen und schnellen Heizelement vornehmen zu können, kann die Faser zunächst unterhalb des Bereiches geeigneter Beschichtungstemperaturen abgekühlt werden. Der Einstellwert der Fasertemperatur, bei der der Sollwert der Beschichtungsdicke erzeugt wird, erfolgt dann durch Regelung der Heizleistung eines der Kühleinheit nachgeordneten Heizelementes.

In analoger Weise läßt sich auch die Dicke einer oder mehrerer weiterer Beschichtungen auf der Primärbeschichtung einstellen. Zu diesem Zweck erfolgt eine weitere Beschichtung der Faser, nach der ihr Durchmesser mit Beschichtung gemessen wird. Der weiteren Beschichtungseinheit ist ein Heiz- oder Kühlelement vorgeordnet, das die Temperatur der Faser in Abhängigkeit vom ermittelten Durchmesser derart einstellt, daß die Beschichtungsdicke einem Sollwert entspricht.

In der nachfolgenden Beschreibung werden Ausführungsbeispiele der Erfindung anhand der prinzipienhaften Zeichnung näher erläutert.

Sie zeigt
- Fig. 1:: Eine Beschichtungsvorrichtung nach dem Stand der Technik.
- Fig. 2:: Funktionsschema einer erfindungsgemäßen Vorrichtung zur Regelung der Beschichtungsdicke.
- Fig. 3:: Vorrichtung mit Regelung der Beschichtungsdicke durch eine elektrische Heizung.

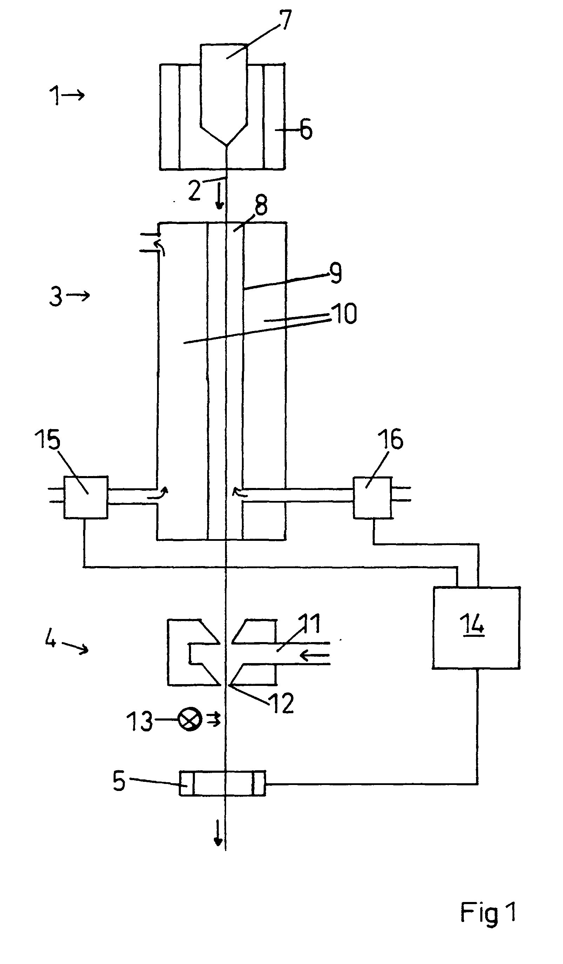

Im grundsätzlichen Aufbau besteht die in Fig. 1 dargestellte Vorrichtung nach dem Stand der Technik aus einer Einheit 1 zur Herstellung der Faser 2 sowie einer nachfolgenden Kühleinheit 3, einer Beschichtungseinheit 4 und einem Durchmesser-Meßgerät 5, durch welche die Faser 2 aufeinanderfolgend geführt ist.

Die Herstelleinheit 1 umfaßt einen Ziehofen 6, in dem die Faser 2 aus der unteren Spitze der in diesem Bereich angeschmolzenen Vorform 7 gezogen wird. Durch Variation der Ziehgeschwindigkeit wird dabei der Durchmesser der Faser 2 konstant gehalten.

In der häufig als Faserschutzrohr bezeichneten Kühleinheit 3 erfolgt die Abkühlung der Faser 2 von der Temperatur des Ziehofens 6 in den Bereich zur Beschichtung geeigneter Temperaturen. Die Kühleinheit 3 wird von einem Schutzgas 8 durchströmt, das einen Luftzutritt zur Faser 2 verhindert und der Wärmeabfuhr zur Oberfläche 9 des Kühlmantels dient, der seinerseits von einem Kühlmedium 10 durchströmt ist.

In der Beschichtungseinheit 4 erfolgt die oberflächliche Beschichtung der Faser 2 mit einem flüssigen Beschichtungsmittel 11, das unter Druck in einer Beschichtungsdüse 12 aufgetragen und nachfolgend mit einer UV-Lichtquelle 13 ausgehärtet wird. Im Durchmesser-Meßgerät 5 wird die Dicke dieser Beschichtung oder der Gesamtdurchmesser der Faser 2 mit Beschichtung bestimmt.

Der ermittelte Wert wird einem Steuerelement 14, z. B. einem Computer, zugeführt, das eine Sollwertregelung vornimmt. Zu diesem Zweck ist das Steuerelement 14, ggf. über Leistungsschaltelemente, mit einem oder mehreren Regelgliedern 15, 16 verbunden, mit denen sich z. B.

Temperatur oder Volumenstrom des Kühlmediums 10 oder die Zusammensetzung, Temperatur oder der Volumenstrom des in die Kühleinheit 3 einströmenden Schutzgases 8 einstellen lassen. Die gleichzeitige Regelung mehrerer dieser Parameter ist möglich.

Auf diese Weise läßt sich die Temperatur der Faser 2 beim Eintritt in die Beschichtungseinheit 4 variieren und auf einen Einsteliwert regeln. In der Folge ändert sich die Viskosität des flüssigen Beschichtungsmittels 11 an der Oberfläche der Faser 2 und damit die aus der Beschichtungsdüse 12 austretende Menge. Das Ergebnis ist eine Änderung der Beschichtungsdicke, die mit zunehmender Temperatur der Faser 2 abnimmt.

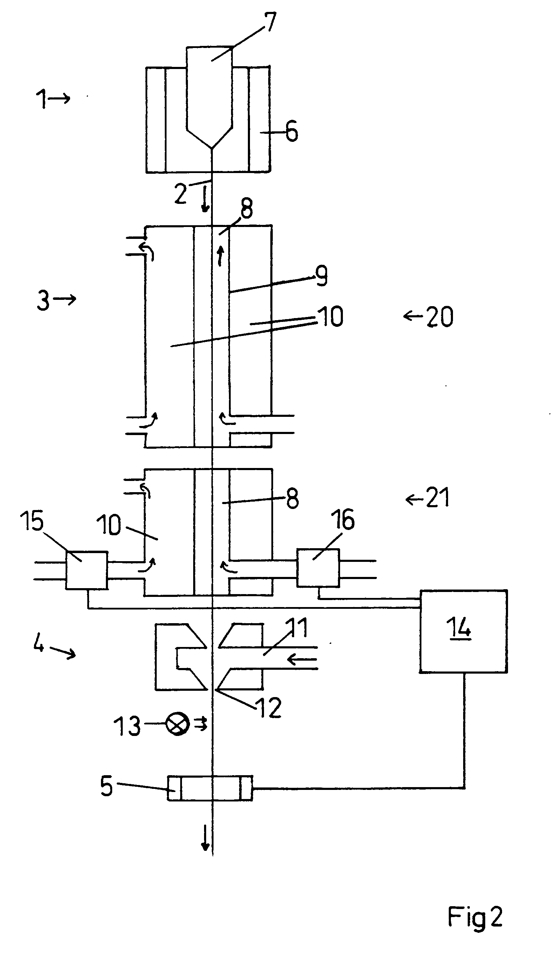

Fig. 2 zeigt eine erfindungsgemässe Vorrichtung zur Regelung der Beschichtungsdicke, deren Elemente in gleicher Weise zusammenwirken. Im Unterschied zum vorbeschriebenen Beispiel nach dem Stand der Technik erfolgt die Temperaturregelung 3 jedoch zweistufig durch eine Kühleinheit 20 und eine Regelvorrichtung 21. Die Kühleinheit 20 wird mit konstanten Parametern von Schutzgas 8 und Kühlmedium 10 betrieben und bewirkt den überwiegenden Teil der Kühlleistung. Das Steuerelement 14 regelt lediglich die Regelvorrichtung 21 der Kühleinheit 3 mittels der Regelglieder 15 und 16 auf die oben beschriebene Weise. Damit läßt sich ein erheblich verbessertes Regelverhalten erreichen.

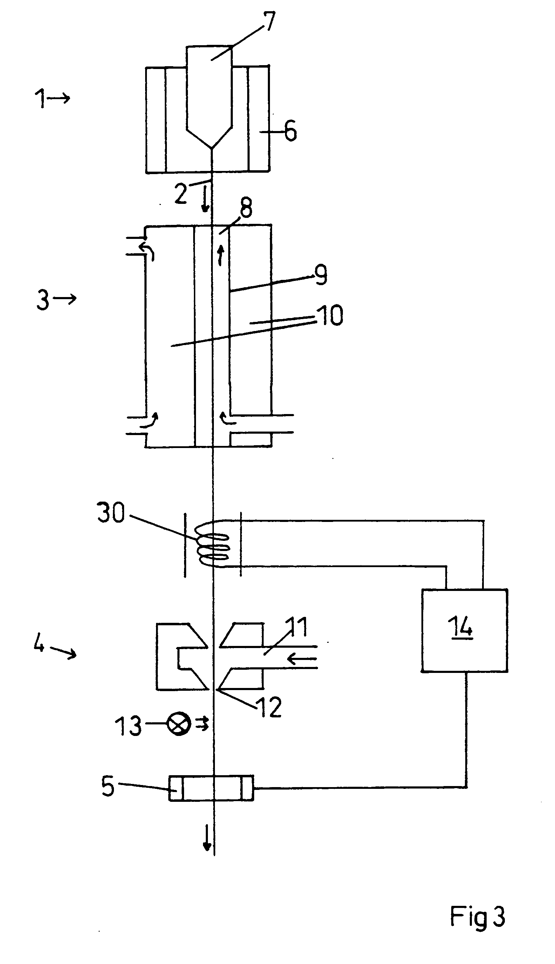

Eine zweite erfindungsgemässe Vorrichtung zur Regelung der Beschichtungsdicke zeigt Fig. 3, bei der die Regelvorrichtung ein Heizelement 30 ist. Der Betrieb der Vorrichtung erfolgt derart, daß die Faser 2 in der Kühleinheit 20 unter den Bereich geeigneter Einstelltemperaturen zu ihrer Beschichtung oder auf den minimalen, zweckmäßigen Wert abgekühlt wird. Das Steuerelement 14 regelt den Strom durch das Heizelement 30, das die Faser 2 auf die erforderliche Einstelltemperatur zur Erreichung des Sollwertes der Beschichtungsdicke erwärmt.

Auf diese Weise entstehen Beschichtungsvorrichtungen, die eine verbesserte Homogenität der Beschichtungseigenschaften erzeugen und eine rasche und präzise Regelung der Beschichtungsdicke gestatten.

## Patentansprüche

1. Vorrichtung zur Regelung der Beschichtungsdicke einer optischen Faser (2), enthaltend eine Einheit (1) zur Herstellung der Faser (2), eine Kühleinheit (20), eine Beschichtungseinheit (4) und ein Gerät (5), das den Durchmesser der beschichteten Faser (2) bestimmt, wobei die Vorrichtung weiter ein Steuerelement (14) aufweist, das derart aufgebaut ist, dass es ein Regelglied (15, 16) in Abhängigkeit vom gemessenen Durchmesser derart steuert, dass die Dicke der Beschichtung einem Sollwert entspricht, wobei die Kühleinheit (20) der Beschichtungseinheit (4) in Bewegungsrichtung der Faser (2) vorgeordnet ist, und das Regelglied (15, 16) so aufgebaut ist, dass die Temperatur der unbeschichteten Faser (2) eingestellt wird, **dadurch gekennzeichnet, dass** die Vorrichtung eine weitere der Kühleinheit in Bewegungsrichtung der Faser nachgeordnete und davon getrennte Regelvorrichtung (21) zur Temperatureinstellung der unbeschichteten Faser aufweist und das Regelglied (15, 16) einen Betriebsparameter dieser Regelvorrichtung (21) einstellt.

2. Vorrichtung nach Anspruch 1, **dadurch gekennzeichnet, dass** die Regelvorrichtung (21) ein Kühl- oder Heizelement (30) ist, durch welches die Faser (2) verläuft.

3. Vorrichtung nach Anspruch 2, **dadurch gekennzeichnet, dass** das Kühl- oder Heizelement (30) elektrisch betrieben ist.

4. Vorrichtung nach einem der vorhergehenden Ansprüche, **dadurch gekennzeichnet, dass** die beschichtete Faser (2) durch eine weitere Beschichtungseinheit mit nachgeordnetem Messgerät, das den Durchmesser der dann doppeltbeschichteten Faser (2) bestimmt, verläuft und ein weiteres Regelglied vorhanden ist, das von einem Steuerelement in Abhängigkeit vom Durchmesser der doppeltbeschichteten Faser (2) nach der weiteren Beschichtungseinheit so gesteuert ist, dass der Durchmesser der Beschichtung konstant ist und das weitere Regelglied die Temperatur der einfachbeschichteten Faser (2) vor dem Eintritt in die weitere Beschichtungseinheit einstellt.

5. Verfahren zur Herstellung einer optischen Faser mit geregelter Beschichtungsdicke mit folgenden Verfahrensschritten:
- Herstellung der Faser (2) bei erhöhter Temperatur,
- Kühlung der Faser (2), in einer Kühleinheit (20),
- Beschichtung der Faser (2) mit einem flüssigen Beschichtungsmittel (11),
- Messung des Faserdurchmessers mit Beschichtung oder der Beschichtungsdicke,
**gekennzeichnet durch**
- Temperieren der Faser in einer nach der Kühleinheit (20) folgenden und von dieser getrennten Regelvorrichtung (21,30),
- Steuerung der Regelvorrichtung (21, 30) mittels eines Regelgliedes (15, 16) in Abhängigkeit des gemessenen Durchmessers der beschichteten Faser, so dass die Dicke der Beschichtung einem Sollwert entspricht.

6. Verfahren nach Anspruch 5, **dadurch gekennzeichnet, dass** eine weitere Beschichtung der einfachbeschichteten Faser (2) erfolgt, der Durchmesser der Faser (2) mit der weiteren Beschichtung gemessen wird und der weiteren Beschichtung ein Kühl- oder Heizelement vorgeordnet ist, das die Temperatur der einfachbeschichteten Faser (2) in Abhängigkeit von deren gemessenen Durchmesser auf einen weiteren Einstellwert regelt, bei der die Dicke der weiteren Beschichtung ihrem Sollwert entspricht.

## Claims

1. Apparatus for regulating the coating thickness of an optical fibre (2), comprising a unit (1) for production of the fibre (2), a cooling unit (20), a coating unit (4) and a device (5) which determines the diameter of the coated fibre (2), the apparatus further comprising a control element (14) which is so arranged that it so controls a regulating element (15, 16) in dependence on the measured diameter that the thickness of the coating corresponds to a desired value, the cooling unit (20) being arranged upstream of the coating unit (4) in the direction of movement of the fibre (2) and the regulating element (15, 16) being so arranged that the temperature of the uncoated fibre (2) is adjusted, **characterised in that** the apparatus comprises a further regulating apparatus (21), arranged downstream of the cooling unit in the direction of movement of the fibre and separate therefrom, for adjustment of the temperature of the uncoated fibre, and the regulating element (15, 16) adjusts an operating parameter of that regulating apparatus (21).

2. Apparatus according to claim 1, **characterised in that** the regulating apparatus (21) is a cooling or heating element (30), through which the fibre (2) passes.

3. Apparatus according to claim 2, **characterised in that** the cooling or heating element (30) is electrically operated.

4. Apparatus according to one of the preceding claims, **characterised in that** the coated fibre (2) passes through a further coating unit having a measurement device arranged downstream which determines the diameter of the then double-coated fibre (2), and a further regulating element is present which is so controlled by a control element in dependence on the diameter of the double-coated fibre (2) after the further coating unit that the diameter of the coating is constant, and the further regulating element adjusts the temperature of the single-coated fibre (2) before entry into the further coating unit.

5. Method of producing an optical fibre having a regulated coating thickness, comprising the following method steps:
- production of the fibre (2) at elevated temperature,
- cooling of the fibre (2) in a cooling unit (20),
- coating of the fibre (2) with a liquid coating medium (11),
- measurement of the fibre diameter together with the coating or of the coating thickness,
**characterised by**
- temperature-adjustment of the fibre in a regulating apparatus (21, 30) following after the cooling unit (20) and separate therefrom,
- control of the regulating apparatus (21, 30) by means of a regulating element (15, 16), in dependence on the measured diameter of the coated fibre, so that the thickness of the coating corresponds to a desired value.

6. Method according to claim 5, **characterised in that** a further coating of the single-coated fibre (2) is performed, the diameter of the fibre (2) having the further coating is measured, and upstream of the further coating there is arranged a cooling or heating element which regulates the temperature of the single-coated fibre (2), in dependence on its measured diameter, to a further adjustment value, at which temperature the thickness of the further coating corresponds to its desired value.

## Revendications

1. Dispositif pour régler l'épaisseur de revêtement d'une fibre optique (2), contenant une unité (1) pour fabriquer la fibre (2), une unité de refroidissement (20), une unité de revêtement (4) et un appareil (5), qui détermine le diamètre de la fibre revêtue (2), le dispositif comportant en outre un élément de commande (14) qui est agencé de telle sorte qu'il commande un organe de réglage (15,16) en fonction du diamètre mesuré de telle sorte que l'épaisseur du revêtement correspond à une valeur de consigne, dans lequel l'unité de refroidissement (20) est disposée en amont de l'unité de revêtement (4) dans la direction de déplacement de la fibre (2), et l'organe de réglage (15,16) est agencé de telle sorte que la température de la fibre (2) non revêtue est réglée, **caractérisé en ce que** le dispositif comporte un autre dispositif de réglage (21), qui est disposé en aval de l'unité de refroidissement dans la direction de déplacement de la fibre et en est séparé, pour régler la température de la fibre (2) non revêtue et que l'organe de réglage (15, 16) règle un paramètre de fonctionnement de ce dispositif de réglage (21).

2. Dispositif selon la revendication 1, **caractérisé en ce que** le dispositif de réglage (21) est un élément de refroidissement ou de chauffage (30), que la fibre (2) traverse.

3. Dispositif selon la revendication 2, **caractérisé en ce que** l'élément de refroidissement ou de chauffage (30) fonctionne électriquement.

4. Dispositif selon l'une des revendications précédentes, **caractérisé en ce que** la fibre revêtue (2) traverse une autre unité de revêtement comportant un appareil de mesure installé en aval, qui détermine le diamètre de la fibre (2) alors pourvue d'un revêtement double, et qu'il est prévu un autre organe de réglage qui est commandé par un élément de commande en fonction du diamètre de la fibre (2) pourvue d'un revêtement double, en aval de l'autre unité de revêtement de telle sorte que le diamètre du revêtement est constant et que l'autre organe de réglage règle la température de la fibre (2) pourvue d'un revêtement simple, avant l'entrée dans l'autre unité de revêtement.

5. Procédé pour fabriquer une fibre optique possédant une épaisseur de revêtement réglée, à l'aide des étapes opératoires suivantes :
- fabrication de la fibre (2) à une température élevée,
- refroidissement de la fibre (2), dans une unité de refroidissement (20),
- revêtement de la fibre (2) avec un agent de revêtement liquide (11),
- mesure du diamètre de la fibre pourvue d'un revêtement, ou de l'épaisseur de revêtement,
**caractérisé par**
- la mise en température de la fibre dans un dispositif de réglage (21,30) qui est disposé à la suite de l'unité de refroidissement (20) et en est séparé,
- la commande du dispositif de réglage (21,30) à l'aide d'un organe de réglage (15,16) en fonction du diamètre mesuré de la fibre revêtue, de sorte que l'épaisseur du revêtement correspond à une valeur de consigne.

6. Procédé selon la revendication 5, **caractérisé en ce qu'**on applique un revêtement supplémentaire à la fibre (2) pourvue d'un revêtement simple, qu'on mesure le diamètre de la fibre (2) possédant le revêtement supplémentaire et qu'en amont de l'unité d'application du revêtement supplémentaire est installé un élément de chauffage ou de refroidissement, qui règle la température de la fibre (2) pourvue d'un revêtement simple en fonction de son diamètre mesuré, sur une autre valeur de réglage, pour laquelle l'épaisseur du revêtement supplémentaire correspond à sa valeur de consigne.
